Europäisches Patentamt

(19) European Patent Office

Office européen des brevets

(11) Numéro de publication: **0 276 600**
**B1**

(12) **FASCICULE DE BREVET EUROPEEN**

(45) Date de publication du fascicule du brevet:
**22.11.90**

(21) Numéro de dépôt: **87402869.9**

(22) Date de dépôt: **15.12.87**

(51) Int. Cl.⁵: **G01P 1/02,** G01P 3/488

(54) **Capteur électromagnétique à reluctance variable et son procédé de montage.**

(30) Priorité: **23.12.86 FR 8618054**

(43) Date de publication de la demande:
**03.08.88 Bulletin 88/31**

(45) Mention de la délivrance du brevet:
**22.11.90 Bulletin 90/47**

(84) Etats contractants désignés:
**DE GB IT SE**

(56) Documents cités:
**EP-A- 0 194 213**
**DE-A- 2 418 143**
**DE-A- 2 928 610**

(73) Titulaire: **Siemens Aktiengesellschaft,**
**Wittelsbacherplatz 2, D-8000 München 2(DE)**

(72) Inventeur: **Echasseriau, Gilbert, 30, rue de Digue**
**Appartement 54, F-31300 Toulouse(FR)**
Inventeur: **Oliveau, Patrice, 20, rue Erick Satie**
**Appartement 582, F-31100 Toulouse(FR)**

## Description

La présente invention est relative à un capteur électromagnétique définissant un circuit magnétique dont la reluctance varie en fonction d'une grandeur à mesurer telle que la vitesse ou la proximité d'un mobile, par exemple.

Plus particulièrement l'invention concerne un tel capteur destiné à mesurer la vitesse de rotation d'un arbre tournant ou d'une roue de véhicule. L'invention concerne aussi un procédé de montage de ce capteur.

Dans une telle application, le capteur est associé à un disque coaxial à une roue, par exemple, et tournant avec celle-ci, à la même vitesse angulaire. Le disque présente à sa périphérie des irrégularités de géométrie, telles que des dents. Le capteur comprend ordinairement un corps généralement cylindrique percé d'un trou axial dans lequel sont logés un aimant permanent et une pièce polaire contigus. Un bobinage électrique est enroulé sur l'extérieur du corps concentriquement à la pièce polaire. Le corps est monté par rapport au disque de manière à définir, entre une extrémité de la pièce polaire et la périphérie du disque, un entrefer de largeur variable en fonction de la position des dents du disque par rapport à la pièce polaire, quand le disque et la roue tournent. Cet entrefer fait partie d'un circuit magnétique dont la reluctance varie alors avec une fréquence égale à celle du passage des dents du disque devant la pièce polaire du capteur. Il en est de même du signal de tension que l'on peut prélever aux bornes du bobinage du capteur, signal qui, après mise en forme, est exploité pour mesurer la vitesse de la roue associée.

Lorsqu'on utilise un tel capteur, il importe de fixer avec une grande précision la position de la face d'extrémité libre de la pièce polaire par rapport à la trajectoire de la périphérie du disque. On observe en effet pratiquement qu'un décalage axial de quelques dixièmes de millimètre de l'extrémité de la pièce polaire, dans le sens de l'accroissement de l'entrefer, peut conduire à une perte de signal utile. Il convient donc de bloquer l'extrémité de la pièce polaire dans le corps du capteur, dans une position fixée avec précision par rapport à une surface de référence du capteur, qui servira ultérieurement à repérer la position du capteur par rapport au disque.

Suivant la technique couramment utilisée aujourd'hui pour assembler un tel capteur, on enfile l'aimant permanent et la bobine dans une cavité du corps du capteur prévue pour les recevoir, une butée franche prévue dans la cavité arrêtant ces pièces dans cette cavité. Si, par exemple, une extrémité de l'aimant permanent vient porter sur la butée alors que la pièce polaire vient porter sur l'autre extrémité de l'aimant permanent, on comprend que la précision de la position de l'extrémité libre de la pièce polaire dépend de la tolérance admise sur la longueur de l'aimant, ajoutée à celle admise sur la longueur de la pièce, et augmentée encore de celle admise sur la précision de la position de la butée elle-même.

Ce cumul de tolérances est très défavorable à la fixation en position précise de l'extrémité libre de la pièce polaire. Il introduit une trop·forte dispersion de la position de cette extrémité, avec pour conséquence une perte de sensibilité inacceptable de certains capteurs d'un lot de capteurs assemblés suivant le procédé décrit ci-dessus.

La présente invention a donc pour but de réaliser un capteur électromagnétique à reluctance variable conçu de manière à permettre une fabrication en série d'un lot de tels capteurs, à sensibilité de faible dispersion.

La présente invention a aussi pour but de fournir un procédé de montage d'un tel capteur.

On atteint ces buts de l'invention avec un capteur électromagnétique à reluctance variable, du type qui comprend une carcasse présentant une cavité cylindrique, un aimant permanent et une pièce polaire métallique enfilés en contiguïté dans cette cavité de manière qu'une extrémité de la pièce polaire déborde de la carcasse, et un bobinage électrique enroulé sur la carcasse autour de cette cavité pour fournir entre ses bornes un signal électrique de sortie du capteur, caractérisé en ce qu'il comprend un moyen de blocage à effet de coin agencé dans cette cavité pour agir sur une extrémité de l'ensemble constitué par l'aimant permanent et la pièce polaire de manière à immobiliser cet ensemble dans une position où ladite extrémité de la pièce polaire est séparée d'une distance $\underline{d}$ prédéterminée d'une surface de référence choisie sur la carcasse.

L'ensemble aimant permanent/pièce polaire est monté dans la carcasse du capteur suivant l'invention par un procédé suivant lequel on insère bout-à-bout dans la cavité de cette carcasse les pièces de l'ensemble constitué par l'aimant permanent et la pièce polaire, caractérisé en ce qu'on pousse l'ensemble dans la cavité de manière qu'une extrémité de l'ensemble subisse progressivement l'effet de coin dû au moyen de blocage, on surveille la distance qui sépare l'extrémité libre de la pièce polaire, d'une surface de référence repérée sur la carcasse, et on arrête la poussée sur l'ensemble quand cette distance est égale à une valeur $\underline{d}$ prédéterminée.

Au dessin annexé, donné seulement à titre d'exemple :

- la figure 1 est une vue schématique, partiellement en coupe axiale, d'un capteur suivant l'invention ; et
- la figure 2 est une vue schématique, en coupe axiale, d'une partie d'un deuxième mode de réalisation du capteur suivant l'invention.

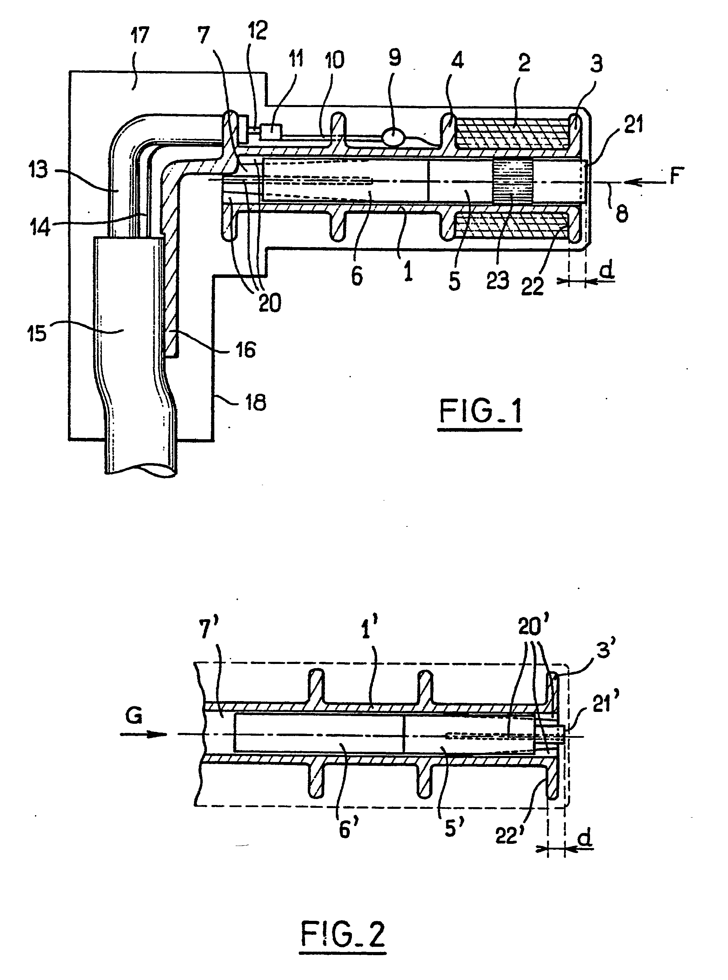

On se réfère à la figure 1 où il apparait que le capteur suivant l'invention comprend essentiellement une carcasse 1 qui porte un bobinage électrique 2 entre 2 joues 3 et 4, une pièce polaire 5 et un aimant permanent 6 glissés bout-à-bout dans une cavité cylindrique 7 de la carcasse, d'axe 8.

Chaque extrémité du fil du bobinage 2 est raccordée par une soudure 9 à une cosse de raccordement 10 dont l'autre extrémité 11 est sertie sur le fil 12 d'un des deux conducteurs 13, 14 d'un câble 15. Pour la clarté du dessin, on a représenté une cosse de raccordement seulement sur la Fig. 1.

La carcasse 1 présente une patte 16 transversale à son axe 8 pour servir d'appui et de fixation au câble 15. L'ensemble des pièces décrites ci-dessus est noyée dans une résine d'isolement électrique et de protection mécanique par un procédé classique de moulage/enrobage par injection à l'intérieur d'un moule qui définit la surface extérieure 18 du capteur terminé. Celle-ci peut aussi être définie partiellement par un capot de protection passé sur la partie cylindrique du capteur.

Suivant la présente invention, des nervures 20 présentant un profil longitudinal légèrement incliné (quelques degrés) sur l'axe 8 de la cavité 7 de la carcasse 1, sont formées sur la paroi de cette cavité, au voisinage de l'extrémité opposée à celle qui est bouchée par la pièce polaire 5, le pied de chaque nervure étant parallèle à l'axe de la cavité.

Ces nervures peuvent être en nombre variable, 4 par exemple, et elles constituent ensemble un moyen de blocage par effet de coin de l'aimant 6. Une surface tronconique complète peut être substituée à cet ensemble de nervures, le sommet du cône auquel appartient cette surface tronconique se trouvant sur l'axe 8 de la cavité 7, à gauche de l'extrémité gauche de cette cavité, du point de vue de la figure 1.

Suivant une caractéristique particulièrement avantageuse de la présente invention, on utilise le moyen de blocage constitué par cet ensemble de nervures ou cette surface tronconique pour régler automatiquement et avec précision la distance $d$ qui sépare la face d'extrémité droite 21 (du point de vue de la Fig. 1) de la pièce polaire 5, par rapport à une surface de référence constituée, par exemple, par la surface intérieure 22 de la joue d'extrémité 3 de la carcasse 1.

Pour ce faire, lors de l'assemblage du capteur en machine de montage, l'aimant 6 et la pièce pièce polaire 5 sont successivement enfilés dans la cavité 7 par un outil d'insertion. La face gauche de l'aimant 6 est alors arrêtée par le départ des nervures 20, du fait que le diamètre de cet aimant n'est inférieur au diamètre de la cavité 7 que de quelques dixièmes de millimètre. Du fait de la longueur des nervures 20, la pièce polaire qui fait suite à l'aimant déborde alors largement de la joue 3 de la carcasse. L'outil d'insertion vient alors pousser la pièce polaire 5 dans le sens de la flèche F (Fig. 1) pour forcer l'ensemble pièce polaire-aimant à s'enfoncer dans la cavité 7. L'extrémité gauche de l'aimant 6 vient porter alors sur des parties de nervures de hauteur croissante qui développent sur cet aimant des efforts de plus en plus importants, par l'effet de coin du à la géométrie des nervures 20.

En ajustant l'inclinaison des profils des nervures sur l'axe 8 et la largeur de celles-ci, on peut régler ces efforts de frottement de manière que, pour un enfoncement donné de l'aimant dans la cavité 8, ces efforts suffisent à immobiliser l'aimant dans la cavité, en l'absence d'effort appliqué par l'outil suivant la flèche F. Outre la géométrie des nervures un tel réglage prend en compte, bien entendu, le module d'élasticité du matériau constituant les nervures et le coefficient de frottement à l'interface nervures-aimant.

On peut améliorer encore le blocage de l'aimant dans la cavité en utilisant une déformation permanente des nervures obtenue en exerçant sur celles-ci, par l'intermédiaire de l'outil, des efforts qui font passer le matériau des nervures, à l'interface aimant-nervure, dans le domaine plastique, ainsi qu'il apparaît à la Fig. 1. Il y a alors arrachement de matière sur les arêtes des nervures. Le choix d'une matièreplastique convenable, telle qu'un polyamide, un polyester ou un polysulfure de phénylène (PPS), pour constituer ces nervures, permet d'atteindre ce résultat. Avantageusement les nervures peuvent être formées d'une pièce avec la carcasse, par moulage de cette matière plastique.

Suivant l'invention, le réglage de la position de l'extrémité de la pièce polaire s'obtient en supprimant la poussée exercée par l'outil d'insertion sur l'ensemble pièce polaire/aimant, lorsque la distance $d$ prédéterminée est atteinte, la géométrie et le matériau des nervures étant choisis pour que la suppression de la poussée n'intervienne qu'après déformation de ce matériau, à l'interface nervures/aimant, dans le domaine élastique et même, avantageusement, dans le domaine plastique.

Pour ce faire, un palpeur formant partie de la machine d'assemblage, est associé à l'outil d'insertion pour comparer à chaque intant à la valeur $d$, la distance qui sépare l'extrémité de la pièce polaire sur laquelle s'appuie cet outil de la surface de référence, pendant l'application d'un effort par l'outil sur cette pièce polaire, qui s'enfonce alors progressivement dans la cavité 7 de la caracasse. Quand le palpeur détecte que cette distance atteint la valeur prédéterminée $d$ correspondant à une mise en place correcte de la pièce polaire dans la caracasse, la pression exercée par l'outil d'insertion sur cette pièce polaire est supprimée. L'aimant est alors coincé dans les nervures par déformation élastique ou plastique de celles-ci et constitue une butée, par son extrémité droite, pour l'extrémité gauche de la pièce polaire qui est en appui sur l'aimant. Un moletage 23 formé sur une partie au moins de la surface cylindrique de la pièce polaire permet de développer un frottement entre cette pièce et la cavité 7, suffisant pour empêcher un glissement axial de la pièce polaire dans cette cavité.

Suivant un mode de réalisation particulier de l'invention on choisit, comme surface de référence, la surface intérieure 22 de la joue 3, pour assurer un repérage précis de l'extrémité 21 de la pièce polaire par rapport au bobinage 2 qui s'appuie sur cette surface. On s'affranchit ainsi de la tolérance sur l'épaisseur axiale de cette joue 3 dont il faudrait tenir compte si la surface extérieure de la joue 3 était prise comme surface de référence.

Le bobinage 2 étant formé sur la carcasse, l'aimant et la pièce polaire fixés dans cette carcasse dans la position prédéterminée, le câble 15 monté sur le capteur et les fils du bobinage 2 connectés aux conducteurs 13, 14 du câble par les cosses de raccordement, la fabrication du capteur suivant l'invention s'achève par l'enrobage du capteur avec une résine d'isolation électrique et de protection mécanique, en matériau thermoplastique ou thermodurcissable.

Cette opération est réalisée par la technique du surmoulage par injection dans un moule définissant le volume de la surface extérieure 18. Avantageusement la partie de ce volume qui enveloppe le bobinage et la face d'extrémité adjacente du capteur peut être protégée par un capuchon en acier inoxydable, en aluminium ou en une matière thermoplastique, le fond de ce capuchon venant s'appuyer sur l'extrémité adjacente de la pièce polaire. Bien entendu l'épaisseur du fond du capuchon doit être soigneusement calibrée et présenter, dans un lot, une faible dispersion pour ne pas réagir défavorablement sur celle des sensibilités des capteurs du lot. L'ensemble aimant/pièce polaire est alors complètement immobilisé axialement dans la cavite 7, entre les nervures 20 et le capuchon. Une injection de résine contre l'extrémité gauche de l'aimant, réalisée lors du surmoulage, peut parfaire cette immobilisation.

Ainsi, grâce à la présente invention, les tolérances sur les longueurs de la pièce polaire et de l'aimant sont sans influence sur la dispersion de la position $d$ de l'extrémité de la pièce polaire dans un lot de capteurs assemblés par le procédé suivant l'invention. On observera que l'influence de ces tolérances dans les procédés d'assemblage de la technique antérieure est particulièrement pernicieuse car leurs effets s'ajoutent lorsqu'il n'en est pas tenu compte dans la mise en place axiale de l'ensemble aimant/pièce polaire dans la carcasse.

On a représenté à la figure 2 une partie d'un capteur suivant un autre mode de réalisation de l'invention, qui illustre aussi une variante du procédé de montage suivant l'invention. Des pièces similaires à celles du capteur de la figure 1 sont repérées par le même nombre, affecté d'un "prime". La carcasse 1′ de ce capteur est conçue pour permettre l'introduction de la pièce polaire 5′ et de l'aimant 6′ par l'extrémité de la cavité 7′ qui est opposée à celle de laquelle déborde la pièce polaire, une fois le capteur terminé.

Des nervures 20′ sont formées alors dans la cavité 7′, au voisinage de la joue 3′ de la carcasse (à droite sur la Fig. 2). Après insertion de la pièce polaire 5′ et de l'aimant 6′ dans le cavité, un outil vient pousser l'ensemble dans celle-ci en agissant axialement sur l'aimant 6′, dans le sens de la flèche G. C'est alors la pièce polaire qui vient se coincer sur les nervures 20′, suivant la procédure de coincement décrite en liaison avec la Fig. 1. On remarquera que le diamètre de l'extrémité 21′ de la pièce polaire 5′ est réduit pour s'accomoder de la présence des nervures au voisinage de la joue 3′ de la carcasse 1′. Comme pour le mode de réalisation de la Fig. 1, une injection de résine bloque l'aimant et la pièce polaire dans la cavité 7′ de la carcasse 1′.

Comme pour le mode de réalisation de la figure 1, un palpeur mesure la position axiale de l'extrémité 21′ de la pièce polaire par rapport à une surface de référence de la carcasse du capteur, et commande l'arrêt de la poussée de l'outil d'insertion quand l'écart des extrémités 21′ et 22′ atteint une valeur $d$ prédéterminée.

Bien entendu, l'invention n'est pas limitée aux modes de réalisation décrits et représentés. Par exemple, les nervures ou la surface tronconique 20, 20′ pourraient être formées sur une bague indépendante de la carcasse 5, 5′ et insérée dans la cavite 7,7′ avant la pièce polaire et l'aimant. De même ces deux dernières pièces pourraient être préassemblées avant leur insertion dans cette cavité.

## Revendications

1. Capteur électromagnétique à reluctance variable, du type qui comprend une carcasse présentant une cavité cylindrique, un aimant permanent et une pièce polaire métallique enfilés en contiguïté dans cette cavité de manière qu'une extrémité de la pièce polaire déborde de la carcasse et un bobinage électrique enroulé sur la carcasse autour de cette cavité pour fournir entre ses bornes un signal électrique de sortie du capteur, caractérisé en ce qu'il comprend un moyen de blocage à effet de coin agencé dans cette cavité pour agir sur une extrémité de l'ensemble constitué par l'aimant permanent et la pièce polaire de manière à immobiliser cet ensemble dans une position où l'extrémité de la pièce polaire est séparée d'une distance $d$ prédéterminée, d'une surface de référence choisie sur la carcasse.

2. Capteur conforme à la revendication 1, caractérisé en ce que ledit moyen de blocage est constitué par un groupe de nervures disposées sur la paroi cylindrique de la cavité de la carcasse, le pied de chaque nervure étant parallèle à l'axe de cette cavité tandis que l'arête de la nervure est légèrement inclinée sur cet axe de manière à réduire progressivement le diamètre libre de la cavité, de l'intérieur de celle-ci vers une extrémité de la cavité adjacente à ces nervures.

3. Capteur conforme à la revendication 2, caractérisé en ce que les nervures sont régulièrement distribuées sur la paroi de la cavité.

4. Capteur conforme à la revendication 1, caractérisé en ce que ledit moyen de blocage est constitué par une surface tronconique qui réduit progressivement le diamètre libre de la cavité, de l'intérieur de celle-ci vers une extrémité de la cavité adjacente à cette surface tronconique.

5. Capteur conforme à l'une quelconque des revendications 1 à 4, caractérisé en ce que ledit moyen de blocage est formé d'une pièce avec la carcasse.

6. Capteur conforme à l'une quelconque des revendications 1 à 4, caractérisé en ce que ledit moyen de blocage prend la forme d'une bague glissée dans la carcasse.

7. Capteur conforme à l'une quelconque des revendications précédentes, caractérisé en ce que le moyen de blocage immobilise une extrémité de l'aimant.

8. Capteur conforme à la revendication 7, caractérisé en ce que la pièce polaire porte un moletage périphérique pour être retenue à frottement dans la cavité.

9. Capteur conforme à l'une quelconque des revendications 1 à 6, caractérisé en ce que le moyen de blocage immobilise une extrémité de la pièce polaire.

10. Capteur conforme à l'une quelconque des revendications précédentes, caractérisé en ce que l'extrémité de l'aimant qui n'est par contigué à la pièce polaire, est noyée dans une résine.

11. Procédé de montage de l'ensemble aimant permanent/pièce polaire du capteur conforme à l'une quelconque des revendications 1 à 10, dans la carcasse de ce capteur, suivant lequel on insère bout-à-bout dans la cavité de cette carcasse, les pièces de l'ensemble constitué par l'aimant permanent et la pièce polaire, caractérisé en ce qu'on pousse l'ensemble dans la cavité de manière qu'une extrémité de l'ensemble subisse progressivement l'effet de coin dû au moyen de blocage, on surveille la distance qui sépare l'extrémité libre de la pièce polaire d'une surface de référence repérée sur la carcasse, et on arrête la poussée sur l'ensemble quand cette distance est égale à une valeur d prédéterminée.

12. Procédé conforme à la revendication 11, caractérisé en ce que, à l'arrêt de la poussée, le moyen de blocage est sous déformation élastique.

13. Procédé conforme à la revendication 11, caractérisé en ce que, à l'arrêt de la poussée, le moyen de blocage est sous déformation plastique.

14. Procédé conforme à l'une quelconque des revendications 11 à 13, caractérisé en ce qu'on injecte une résine dans la cavité, pour parfaire le blocage de l'aimant et de la pièce polaire.

15. Procédé conforme à l'une quelconque des revendications 11 à 14, caractérisé en ce qu'on choisit comme surface de référence une surface de la carcasse qui est liée à la position axiale du bobinage.

**Patentansprüche**

1. Elektromagnetischer Meßaufnehmer veränderlichen magnetischen Widerstandes mit einem Gehäusekörper, der einen zylindrischen Innenraum aufweist, einem Permanentmagneten und einem metallischen Polstück, die ineinanderliegend in diesen Hohlraum so eingesetzt sind, daß ein Ende des Polstückes über den Gehäusekörper und eine elektrische Spule vorsteht, die auf dem Gehäusekörper um den Hohlraum herum gewickelt ist, um zwischen ihren Klemmen ein elektrisches Ausgangssignal des Meßaufnehmers abzugeben, dadurch gekennzeichnet, daß er ein mit Keilwirkung arbeitendes Blockiermittel aufweist, das in dem Innenraum vorgesehen ist, um auf ein Ende der von dem Permanentmagneten und dem Polstück gebildeten Anordnung so einzuwirken, daß diese Anordnung in einer Stellung festgelegt wird, in der das Ende des Polstückes einen vorgegebenen Abstand d von einer an dem Gehäusekörper festgelegten Bezugsfläche hat.

2. Meßaufnehmer nach Anspruch 1, dadurch gekennzeichnet, daß das Blockiermittel von einer Gruppe aus Rippen gebildet wird, die auf der zylindrischen Wand des Innenraums des Gehäusekörpers angeordnet sind, wobei die Basis jeder Rippe parallel zur Achse des Innenraums verläuft, während der Außenrand der Rippe zu dieser Achse geringfügig so geneigt ist, daß der freie Durchmesser des Innenraums von innen aus zu einem an den Rippen angrenzenden Ende des Innenraums zunehmend kleiner wird.

3. Meßaufnehmer nach Anspruch 2, dadurch gekennzeichnet, daß die Rippen gleichmäßig auf der Wand des Innenraums verteilt sind.

4. Meßaufnehmer nach Anspruch 1, dadurch gekennzeichnet, daß das Blockiermittel von einer kegelstumpfförmigen Fläche gebildet wird, die den freien Durchmesser des Innenraums von innen aus zu einem an dieser konischen Fläche angrenzenden Ende des Innenraums zunehmend verringert.

5. Meßaufnehmer nach einem der Ansprüche 1 bis 4, dadurch gekennzeichnet, daß das Blockiermittel einteilig mit dem Gehäusekörper ausgebildet ist.

6. Meßaufnehmer nach einem der Ansprüche 1 bis 4, dadurch gekennzeichnet, daß das Blockiermittel die Form eines Gleitringes im Gehäusekörper hat.

7. Meßaufnehmer nach einem der vorhergehenden Ansprüche, dadurch gekennzeichnet, daß das Blockiermittel ein Ende des Magneten festlegt.

8. Meßaufnehmer nach Anspruch 7, dadurch gekennzeichnet, daß das Polstück eine Umfangsränderung aufweist, um durch Reibschluß in dem Innenraum gehalten zu werden.

9. Meßaufnehmer nach einem der Ansprüche 1 bis 6, dadurch gekennzeichnet, daß das Blockiermittel ein Ende des Polstückes festlegt.

10. Meßaufnehmer nach einem der vorhergehenden Ansprüche, dadurch gekennzeichnet, daß das Ende des Magneten, das nicht am Polstück anliegt, in ein Kunstharz eingebettet ist.

11. Verfahren zur Montage der aus Permanentmagnet und Polstück bestehenden Anordnung des Meßaufnehmers nach einem der Ansprüche 1 bis 10 in dem Gehäusekörper des Meßaufnehmers, bei dem die Teile der vom Permanentmagneten und Polstück gebildeten Anordnung in den Innenraum des Gehäusekörpers stumpf aneinander anliegend eingesetzt werden, dadurch gekennzeichnet, daß die Anordnung in den Innenraum so eingeschoben wird, daß ein Ende der Anordnung zunehmend der von dem Blockiermittel herrührenden Keilwirkung ausgesetzt wird, daß der Abstand, der das freie Ende des Polstücks von der Bezugsfläche am Gehäusekörper trennt, überwacht wird und daß das Einschieben der Anordnung beendet wird, wenn dieser Abstand gleich einem vorgegebenen Wert d ist.

12. Verfahren nach Anspruch 11, dadurch gekennzeichnet, daß bei Beendigung des Einschiebens das Blockiermittel elastisch verformt ist.

13. Verfahren nach Anspruch 11, dadurch gekennzeichnet, daß bei Beendigung des Einschiebens das Blockiermittel plastisch verformt ist.

14. Verfahren nach einem der Ansprüche 11 bis 13, dadurch gekennzeichnet, daß ein Kunstharz in den Innenraum eingespritzt wird, um das Festlegen des Magneten und des Polstücks zu vervollständigen.

15. Verfahren nach einem der Ansprüche 11 bis 14, dadurch gekennzeichnet, daß als Bezugsfläche eine Fläche des Gehäusekörpers gewählt wird, die zur axialen Position der Spule in Beziehung steht.

## Claims

1. Variable reluctance electromagnetic sensor of the type which includes a carcass having a cylindrical cavity, a permanent magnet and a metal pole piece contiguously inserted into this cavity such that one end of the pole piece protrudes from the carcass, and an electrical winding wound on the carcass around this cavity in order to provide between its terminals an electrical output signal of the sensor, characterized in that it includes a means of locking by wedging arranged in this cavity in order to act on one end of the assembly formed by the permanent magnet and the pole piece in such a way as to immobilize this assembly in a position in which the end of the pole piece is separated by a predetermined distance $\underline{d}$ from a chosen reference surface on the carcass.

2. Sensor according to claim 1, characterized in that the said means of locking is constituted by a group of ribs placed on the cylindrical wall of the cavity of the carcass, the foot of each rib being parallel to the axis of this cavity while the edge of the rib is slightly inclined to this axis in such a way as to progressively reduce the free diameter of the cavity, from the inside of this cavity towards an end of the cavity adjacent to these ribs.

3. Sensor according to claim 2, characterized in that the ribs are regularly distributed over the wall of the cavity.

4. Sensor according to claim 1, characterized in that the said means of locking is constituted by a truncated cone surface which progressively reduces the free diameter of the cavity from the inside of this cavity towards an end of the cavity adjacent to this truncated cone surface.

5. Sensor according to any one of claims 1 to 4, characterized in that the said means of locking is formed integrally with the carcass.

6. Sensor according to any one of claims 1 to 4, characterized in that the said means of locking takes the form of a ring slipped into the carcass.

7. Sensor according to any one of the preceding claims, characterized in that the means of locking immobilizes one end of the magnet.

8. Sensor according to claim 7, characterized in that the pole piece has a peripheral knurling so that it is retained in the cavity by friction.

9. Sensor according to any one of claims 1 to 6, characterized in that the means of locking immobilizes an end of the pole piece.

10. Sensor according to any one of the preceding claims, characterized in that the end of the magnet which is not contiguous with the pole piece is submerged in a resin.

11. Process of fitting the permanent magnet/pole piece assembly of the sensor according to any one of claims 1 to 10 into the carcass of this sensor, according to which there are inserted end-to-end in the cavity of this carcass the parts of the assembly constituted by the permanent magnet and the pole piece, characterized in that the assembly is pushed into the cavity such that one end of the assembly is progressively subjected to the wedge effect due to the means of locking, the distance which separates the free end of the pole piece from a reference surface marked on the carcass is monitored, and the pressure on the assembly is stopped when this distance is equal to a predetermined value $\underline{d}$.

12. Process according to claim 11, characterized in that, on stopping the pressure, the means of locking is in a state of elastic distortion.

13. Process according to claim 11, characterized in that, on stopping the pressure, the means of locking is in a state of plastic distortion.

14. Process according to any one of claims 11 to 13, characterized in that a resin is injected into the cavity in order to perfect the locking of the magnet and the pole piece.

15. Process according to any one of claims 11 to 14, characterized in that a surface of the carcass which is associated with the axial position of the winding is chosen as a reference surface.

FIG. 1

FIG. 2